# EUROPÄISCHE PATENTANMELDUNG

(11) **EP 3 543 589 A1**
(43) Veröffentlichungstag der Anmeldung: **25.09.2019**
(21) Anmeldenummer: 18162468.5
(22) Anmeldetag: 19.03.2018
(51) Int. Cl.: F16N 7/32, F16N 7/34, F16N 7/38

(54) **SCHMIERSTOFFVERTEILER**

(71) Anmelder: Baier & Köppel GmbH & Co. KG, 91257 Pegnitz (DE)
(72) Erfinder: Köppel, Bernhard, 91257 Pegnitz (DE); Reuschel, Joachim, 91257 Pegnitz (DE); Brandl, Susanne, 91275 Auerbach (DE)
(74) Vertreter: Zech, Stefan Markus

(57) **Zusammenfassung**

Die Erfindung betrifft einen Schmierstoffverteiler für ein Schmiersystem zum Ausbringen eines Schmierstoff-Luft-Gemisches auf eine Schmierstelle, insbesondere eines Schienenfahrzeuges, vorzugsweise auf einen Spurkranz, wobei der Schmierstoffverteiler mindestens einen Eingang zur Aufnahme von Luft, mindestens einen Eingang zur Aufnahme von Schmierstoff und einen Mischbereich zur Mischung der Luft und des Schmierstoffes zu einem Schmierstoff-Luft-Gemisch aufweist und/oder mindestens einen Eingang (10) zur Aufnahme eines Schmierstoff-Luft-Gemisches aufweist sowie mindestens zwei Ausgänge (11a, 11b) zur Abgabe des Schmierstoff-Luft-Gemisches aufweist, wobei, vorzugsweise vor oder in einer Verzweigungsstelle (13) zur Aufteilung des Schmierstoff-Luft-Gemisches in mindestens zwei Teilströme, mindestens ein Zerteilelement, insbesondere Zerteileinsatz (14), angeordnet ist, zur Zerteilung des Schmierstoff-Luft-Gemisches, wobei das Zerteilelement (14) eine Vielzahl von Zerteilkanälen (22a, 22b) ausbildet, wobei die Zerteilkanäle (22a, 22b) miteinander kommunizieren, so dass Moleküle des Schmierstoff-Luft-Gemisches über eine Vielzahl von verschiedenen Pfaden durch das Zerteilelement strömen können und wobei das Zerteilelement (14) derart angeordnet und konfiguriert ist, dass im Betrieb sowohl die Luft als auch der Schmierstoff des Schmierstoff-Luft-Gemisches durch die Zerteilkanäle (22a, 22b) strömt.

## Beschreibung

Die Erfindung betrifft einen Schmierstoffverteiler sowie ein Verfahren zur Aufteilung eines Schmierstoff-Luft-Gemisches.

Die DE 20 2008 001 220 U1 beschreibt eine Einrichtung zur Aufbringung von Schmierstoff durch mindestens eine Sprühdüse, wobei eine Druckluftquelle vorgesehen ist, die über eine Druckluftleitung mit einer Mischkammer verbunden ist, wobei die Mischkammer auch mit einem Schmierstoffkanal verbunden ist, über den aus einem Schmierstoffreservoir entnommener Schmierstoff der Mischkammer zuführbar ist, wobei abstromseitig eine Schmierstoff-Luft-Gemisch-Leitung angeschlossen, die zur Förderung eines Schmierstoff-Luft-Gemisches an eine oder mehrere Sprühdüsen ausgebildet ist. Konkret wird über die Schmierstoff-Luft-Gemisch-Leitung das in der Mischkammer gebildete Schmierstoff-Luft-Gemisch an einen Verteiler und von dort an die Sprühdüsen gefördert. Der Verteiler weist einen Eingang sowie zwei oder mehr Ausgänge auf. Ein in Fig. 9 der DE 20 2008 001 220 U1 dargestellter Verteiler weist einen Zerteilereinsatz 58 aus porösem Material auf. Der Zerteilereinsatz speichert flüssige Schmierstoffpartikel, zerkleinert sie in winzige Tröpfchen und gibt sie (vergleichbar einem Nieselregen) an die vorbeiströmende Druckluft ab. Der Zerteilereinsatz gemäß dem Stand der Technik wird als vergleichsweise komplex und störanfällig empfunden.

Es ist daher Aufgabe der Erfindung, einen Schmierstoffverteiler für ein Schmiersystem zum Ausbringen eines Schmierstoff-Luft-Gemisches auf eine Schmierstelle, insbesondere eines Schienenfahrzeuges, vorzugsweise auf einen Spurkranz, vorzuschlagen, wobei der Schmierstoffverteiler einfach in der Herstellung und zuverlässig im Betrieb sein soll. Es ist weiterhin Aufgabe der Erfindung, ein entsprechendes Verfahren vorzuschlagen.

Die Aufgabe wird insbesondere gelöst durch einen Schmierstoffverteiler für ein Schmiersystem zum Ausbringen eines Schmierstoff-Luft-Gemisches auf eine Schmierstelle, insbesondere eines Schienenfahrzeuges, vorzugsweise auf einen Spurkranz, wobei der Schmierstoffverteiler mindestens einen Eingang zur Aufnahme von Luft, mindestens einen Eingang zur Aufnahme von Schmierstoff und einen Mischbereich zur Mischung der Luft und des Schmierstoffes zu einem Schmierstoff-Luft-Gemisch aufweist. Alternativ oder zusätzlich weist der Schmierstoffverteiler mindestens einen Eingang zur Aufnahme eines Schmierstoff-Luft-Gemisches auf. Dem Schmierstoffverteiler kann also bereits ein Schmierstoff-Luft-Gemisch zugeführt werden. Alternativ kann dem Schmierstoffverteiler auch (separat) Schmierstoff, einerseits, und Luft, andererseits, zugeführt werden, wobei erst in dem Schmierstoffverteiler aus diesen Bestandteilen ein Schmierstoff-Luft-Gemisch gebildet wird. Weiterhin weist der Schmierstoffverteiler mindestens zwei Ausgänge zur Abgabe des Schmierstoff-Luft-Gemisches auf. Insbesondere vor oder in einer Verzweigungsstelle zur Aufteilung des Schmierstoff-Luft-Gemisches (auf die mindestens zwei Ausgänge) in mindestens zwei Teilströme ist mindestens ein Zerteilelement (insbesondere Zerteileinsatz) angeordnet, zur Zerteilung des Schmierstoff-Luft-Gemisches. Das Zerteilelement weist eine Vielzahl von (insbesondere regelmäßig geformten bzw. eine vorbestimmte Struktur ausbildenden.) Zerteilkanälen auf, wobei die Zerteilkanäle miteinander kommunizieren, so dass Moleküle des Schmierstoff-Luft-Gemisches über eine Vielzahl von verschiedenen Pfaden durch das Zerteilelement strömen können. Das Zerteilelement ist vorzugsweise derart angeordnet und konfiguriert, dass (im Betrieb) sowohl die Luft als auch der Schmierstoff des Schmierstoff-Luft-Gemisches durch die Zerteilkanäle strömt. Die Zerteilkanäle können miteinander (zumindest an ihren Enden), vorzugsweise auch zumindest an einer Stelle zwischen ihren jeweiligen Enden (also beispielsweise in dem Bereich zwischen 25 % und 75 % einer Länge des jeweiligen Zerteilkanals) miteinander verbunden sein.

Ein Kerngedanke der Erfindung liegt darin, ein Zerteilelement (Zerteileinsatz) mit einer Vielzahl von Zerteilkanälen bereitzustellen. Dadurch kann auf eine einfache Art und Weise eine Zerteilung des Schmierstoff-Luft-Gemisches erfolgen. Wenn beispielsweise über eine gemeinsame Zuführung (einen gemeinsamen Zuführkanal) das Schmierstoff-Luft-Gemisch zugeführt wird, ist es oftmals so, dass dieses nur vergleichsweise schlecht miteinander vermischt ist. Beispielsweise kann der Schmierstoff vorwiegend an Wänden der gemeinsamen Zuführung fließen und die Luft (Druckluft) eher in einem Zentrum der gemeinsamen Zuführung. Durch die Zerteilkanäle wird nun erreicht, dass die Vermischung deutlich verbessert wird, da zusammenhängende Schmierstoffvolumina durch die Zerteilkanäle auf verschiedene Pfade gezwungen werden, so dass eine feinere Vermischung mit der Luft erfolgt. Insbesondere tritt das Schmierstoff-Luft-Gemisch an einem abstromseitigen Ende des Zerteilelementes in Form von (feinen) Tröpfchen des Schmierstoffes in der Luft aus (auch wenn beispielsweise der Schmierstoff vor Eintritt in das Zerteilelement separat von der Luft, beispielsweise an einer Wandung der gemeinsamen Zuführung, strömt). Auch wenn das Schmierstoff-Luft-Gemisch schon in Form von durch die Luft geförderten Schmierstofftröpfchen vorliegt (vor Eintritt in das Zerteilelement), kann durch das Zerteilelement eine weitere Zerteilung des Schmierstoffes in der Luft erfolgen.

Die grundsätzliche Struktur des erfindungsgemäßen Zerteilelementes ist aus einem anderen Zusammenhang bereits bekannt. Insbesondere werden beim Vermischen der zwei Komponenten von Zwei-Komponenten-Klebstoffen ähnliche Strukturen eingesetzt. Von den Erfindern wurde nun überraschenderweise festgestellt, dass diese Strukturen auch in Form des Zerteilelementes für ein Schmierstoff-Luft-Gemisch vorteilhaft sind. Das war insofern nicht vorhersehbar, da die genannten Mischelemente üblicherweise für das Vermischen von zwei hochviskosen Komponenten eingesetzt werden und nicht für ein Schmierstoff-Luft-Gemisch zur Schmierung von mehreren Schmierstellen.

Vorzugsweise sind erste Zerteilkanäle und zweite Zerteilkanäle ausgebildet, wobei die ersten Zerteilkanäle in einem Winkel gegenüber den zweiten Zerteilkanälen verlaufen, vorzugsweise in einem Winkel von 30° - 120°, weiter vorzugsweise von (zumindest ungefähr) 90°. Durch derartige (kreuz-artig) verlaufende Zerteilkanäle kann besonders effektiv der Schmierstoff in dem Schmierstoff-Luft-Gemisch zerteilt werden.

Das Zerteilelement kann ein dreidimensionales Gitter ausbilden. Vorzugsweise weist das dreidimensionale Gitter eine Vielzahl von Zerteilstegen auf. Besonders bevorzugt verlaufen die Gitterstrukturen (insbesondere Zerteilstege) in einem Winkel gegenüber einer Hauptströmungsrichtung, beispielsweise in einem Winkel von 15° - 75°, insbesondere (zumindest ungefähr) 45°.

Vorzugsweise wird das Schmierstoff-Luft-Gemisch unmittelbar nach dem Zerteilelement in mindestens zwei Teilströme (in Richtung der mindestens zwei Ausgänge des Schmierstoffverteilers) abgeführt. Dadurch kann auf effektive Art und Weise das zerteilte Schmierstoff-Luft-Gemisch den einzelnen Ausgängen des Schmierstoffverteilers zugeführt werden (wobei einer Wiedervereinigung des Schmierstoffes zu größeren Schmierstoffvolumina entgegengewirkt wird). Eine Projektion des Zerteilelementes auf ein Auslassende desselben kann eine geschlossene Fläche ausbilden. Alternativ oder zusätzlich weist eine Projektion des Zerteilelementes auf mindestens eine Ebene, die parallel zu einer (der) Hauptströmungsrichtung verläuft, freie Bereiche auf. Alternativ oder zusätzlich weist eine Projektion des Zerteilelementes auf mindestens eine Ebene (vorzugsweise mindestens oder genau zwei Ebenen), die schräg, vorzugsweise (zumindest ungefähr) in einem 45°-Winkel, zu der Hauptströmungsrichtung verläuft (verlaufen) freie Bereiche auf. Wenn man also in Hauptströmungsrichtung auf das Zerteilelement blickt, sollen vorzugsweise keine Lücken (freie Bereiche) erkennbar sein. Wenn man von der Seite (bzw. senkrecht auf die Hauptströmungsrichtung) auf das Zerteilelement blickt, sollen vorzugsweise zumindest aus einer Richtung blickend Lücken (freie Bereiche) erkennbar sein. Weiterhin sollen bei einem Blickwinkel, der schräg gegenüber der Haupströmungsrichtung ist (vorzugsweise zumindest ungefähr ein 45°-Winkel) ebenfalls Lücken erkennbar sein.

Die Zerteilkanäle können einen vieleckigen, insbesondere viereckigen, vorzugsweise rechteckigen, noch weiter vorzugsweise quadratischen Querschnitt aufweisen. Alternativ können die Zerteilkanäle einen runden (z.B. kreisförmigen) Querschnitt aufweisen.

Vorzugsweise weisen die Zerteilkanäle einen Durchmesser von mindestens 0,5 mm, vorzugsweise mindestens 0,8 mm, vorzugsweise mindestens 1,0 mm und/oder höchstens 3,0 mm, vorzugsweise höchstens 2,0 mm auf. Alternativ oder zusätzlich kann eine Querschnittsfläche der Zerteilkanäle mindestens 0,12 mm², vorzugsweise mindestens 0,30 mm² und/oder höchstens 4,30 mm², vorzugsweise höchstens 1,90 mm² betragen. Unter einem Querschnitt eines Zerteilkanals ist insbesondere ein (Öffnungs-)Querschnitt senkrecht auf eine (lokale) Strömungsrichtung zu verstehen. Der Durchmesser ergibt sich aus einer Betrachtung mindestens eines Querschnittes des jeweiligen Zerteilkanals und soll insbesondere durch einen maximal-möglichen Abstand zweier Punkte auf diesem Querschnitt definiert sein (also beispielsweise bei einem quadratischen Querschnitt der Diagonale von einem Eck zum diagonal gegenüberliegenden Eck, und bei einem Kreis der Kreisdurchmesser). Die hier angegebenen Werte sollen zumindest für einen Zerteilkanal gelten. Wenn dessen Durchmesser bzw. Querschnittsfläche schwankt, ist insbesondere ein durchschnittlicher Durchmesser bzw. eine durchschnittliche Querschnittsfläche heranzuziehen. Vorzugsweise gelten die hier vorgeschlagenen Werte für mehrere oder sämtliche Zerteilkanäle. Wenn diese hinsichtlich ihres (durchschnittlichen) Durchmessers bzw. ihrer (durchschnittlichen) Querschnittsfläche nicht einheitlich sein sollten, soll insbesondere der Durchschnitt aus den (durchschnittlichen) Durchmesserwerten bzw. Querschnittsflächenwerten herangezogen werden.

Vorzugsweise weist das Zerteilelement ein Hohlraumvolumen von mindestens 30 %, weiter vorzugsweise mindestens 55 % und/oder höchstens 90 %, vorzugsweise höchstens 80 % auf. Das Hohlraumvolumen ist insbesondere ein offen zugängliches inneres Volumen des Zerteilelementes, in das Schmierstoff eindringen kann, im Verhältnis zu einem Gesamtvolumen des Zerteilelementes, dass durch ein Innenvolumen einer Hüllfläche des Zerteilelementes (z.B. Zylinderoberfläche bzw. Zylindervolumen) definiert sein kann.

Vorzugseise weist das Zerteilelement ein Gewicht von mindestens 0,05 g, weiter weiter vorzugsweise mindestens 0,12 g und/oder höchstens 1,00 g, weiter vorzugsweise höchstens 0,50 g auf. Das Zerteilelement (der Zerteileinsatz) kann zumindest abschnittsweise (oder vollständig) aus einem Kunststoff, insbesondere einem Polymer, vorzugsweise Polyolefin, weiter vorzugsweise Polypropylen gefertigt sein. Alternativ oder zusätzlich kann das Zerteilelement (der Zerteileinsatz) zumindest abschnittsweise aus Metall (z.B. Stahl oder Aluminium oder einer Aluminiumlegierung) gefertigt sein.

Die Zerteilkanäle können (zumindest abschnittsweise, ggf. vollständig) gerade verlaufen. Alternativ oder zusätzlich können die Zerteilkanäle (zumindest abschnittsweise, ggf. vollständig) schräg zu einer (der) Hauptströmungsrichtung verlaufen. Dadurch wird effektiv der Schmierstoff zerteilt.

Die Hauptströmungsrichtung ist insbesondere diejenige Richtung, die sich ergäbe, wenn das Zerteilelement entfernt würde (bzw. nicht vorgesehen wäre). Bei einem zylinderförmigen Zerteilelement entspräche diese Hauptströmungsrichtung einer Parallelen zu der Zylinderachse.

Das Zerteilelement ist vorzugsweise (in einem Querschnitt zur Hauptströmungsrichtung) rund, insbesondere kreisförmig ausgebildet. Das Zerteilelement kann (in einer dreidimensionalen Betrachtung) einen (Kreis-) Zylinder ausbilden. Alternativ kann das Zerteilelement einen vieleckigen, insbesondere viereckigen, vorzugsweise rechteckigen, weiter vorzugsweise quadratischen Querschnitt aufweisen (bzw. in einer dreidimensionalen Betrachtung ggf. einen Quader ausbilden). Eine Erstreckung des Zerteilelements in einer Längsrichtung (entlang der Hauptströmungsrichtung) beträgt vorzugsweise 0,4 - 3,0 cm, weiter vorzugsweise 0,6 - 1,5 cm. Ein Durchmesser des Zerteilelements beträgt vorzugsweise 0,3 - 2,5 cm, weiter vorzugsweise 0,5 - 1,5 cm. Insbesondere ist bei dem hier genannten Durchmesser eine Betrachtung eines Querschnitts senkrecht zur Längserstreckung (Hauptströmungsrichtung) heranzuziehen. Der Durchmesser soll insbesondere ein maximal-möglicher Abstand von zwei Punkten auf diesem Querschnitt sein (also beispielsweise bei einem Kreis der Kreisdurchmesser, und bei einem Quadrat die Diagonale).

Vorzugsweise können Moleküle des Schmierstoff-Luft-Gemisches über eine Vielzahl von mindestens fünf, vorzugsweise mindestens 20 verschiedene Pfade, weiter vorzugsweise mindestens 50 verschiedene Pfade durch das Zerteilelement strömen. Ein Pfad unterscheidet sich insbesondere dann von einem anderen Pfad (und ist insofern *verschieden),* wenn ein Hindernis (z. B. Trennwand) in einem Fall auf der einen Seite des Hindernisses und im anderen Fall auf der anderen (gegenüberliegenden) Seite des Hindernisses umgangen wird.

Moleküle des Schmierstoff-Luft-Gemisches, die an einem bestimmten Ort in das Zerteilelement eintreten, können vorzugsweise an mindestens zwei, weiter vorzugsweise mindestens fünf, verschiedenen Orten austreten. Ein Abstand der verschiedenen Orte ist vorzugsweise größer als ein Durchmesser der Zerteilkanäle. Umgekehrt kann das Zerteilelement auch so aufgebaut sein (alternativ oder zusätzlich), dass Moleküle des Schmierstoff-Luft-Gemisches, die an fünf verschiedenen Orten in das Zerteilelement eintreten, die an mindestens zwei, vorzugsweise mindestens fünf verschiedenen Orten des Zerteilelementes eintreten, an ein und demselben Ort austreten können.

Die obengenannte Aufgabe wird weiterhin gelöst durch die Verwendung eines (insbesondere des obigen) Zerteilelementes, insbesondere eines (vorzugsweise des obigen) Zerteileinsatzes, zur Zerteilung eines Schmierstoff-Luft-Gemisches, insbesondere in einem (vorzugsweise dem obigen) Schmierstoffverteiler, wobei das Zerteilelement eine Vielzahl von Zerteilkanälen ausbildet, wobei die Zerteilkanäle miteinander kommunizieren.

Die obengenannte Aufgabe wird weiterhin gelöst durch ein Verfahren zur Aufteilung eines Schmierstoff-Luft-Gemisches unter Verwendung des obigen Zerteilelementes (Zerteileinsatzes) und/oder des obigen Schmierstoffverteilers, wobei das Schmierstoff-Luft-Gemisch in dem Zerteilelement zerteilt wird.

Unter einem Zerteileinsatz ist insbesondere eine (vorzugsweise einstückige, weiter vorzugsweise monolithische) Struktur zu verstehen, die in einen Aufnahmeraum innerhalb des Schmierstoffverteilers eingesetzt werden kann (und ggf. lösbar angeordnet ist).

Der Querschnitt einer Schnittstelle zwischen einem stromaufwärts gelegenen Ende des Zerteilelementes und einer Schmierstoff-Luft-Gemisch-Zuführung ist vorzugsweise kleiner (beispielsweise um den Faktor von mindestens 1,1, weiter vorzugsweise mindestens 1,3) als eine Schnittstelle zwischen einem stromabwärts gelegenen Ende des Zerteilelementes und den unmittelbar angrenzenden Fluidabfuhrabschnitt bzw. Fluidabfuhrabschnitten (insbesondere für den Fall, dass unmittelbar an das stromabwärts gelegene Ende eine Aufteilung in mehrere Teilströme in Richtung mehrerer Ausgänge erfolgt). Dadurch können effektiv vergleichsweise kompakt vorliegende Schmierstoffvolumina auf eine größere Strömungsquerschnittsfläche verteilt werden.

Der Schmierstoffverteiler kann mindestens zwei oder genau zwei Ausgänge oder mindestens drei oder genau drei Ausgänge, oder mindestens vier oder genau vier Ausgänge aufweisen.

Weitere Ausführungsformen ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine erste Seitenansicht eines erfindungsgemäßen Schmierstoffverteilers;
- Fig. 2: den Schmierstoffverteiler gemäß Fig. 1 in einer zweiten Seitenansicht;
- Fig. 3: den Schmierstoffverteiler gemäß Fig. 2 in einer Schnittansicht entlang der Linie A-A;
- Fig. 4: eine Schnittansicht des Schmierstoffverteilers gemäß Fig. 1 in einem Schnitt entlang der Linie B-B;
- Fig. 5: eine Schrägansicht des Schmierstoffverteilers gemäß Fig. 1;
- Fig. 6: eine Schrägansicht eines erfindungsgemäßen Zerteileinsatzes;
- Fig. 7: eine Seitenansicht des Zerteileinsatzes gemäß Fig. 6;
- Fig. 8: eine Schrägansicht einer weiteren Ausführungsform eines erfindungsgemäßen Zerteileinsatzes;
- Fig. 9: eine weitere Schrägansicht des Zerteileinsatzes gemäß Fig. 8;
- Fig. 10: eine Ansicht auf ein erstes Ende des Zerteileinsatzes gemäß Fig. 8;
- Fig. 11: eine Ansicht auf ein zweites Ende des Zerteileinsatzes gemäß Fig. 8;
- Fig. 12: eine erste Seitenansicht des Zerteileinsatzes gemäß Fig. 8;
- Fig. 13: eine zweite Seitenansicht des Zerteileinsatzes gemäß Fig. 8; und
- Fig. 14: eine dritte Seitenansicht des Zerteileinsatzes gemäß Fig. 8.

In der nachfolgenden Beschreibung werden für gleiche und gleichwirkende Teile dieselben Bezugszeichen verwendet.

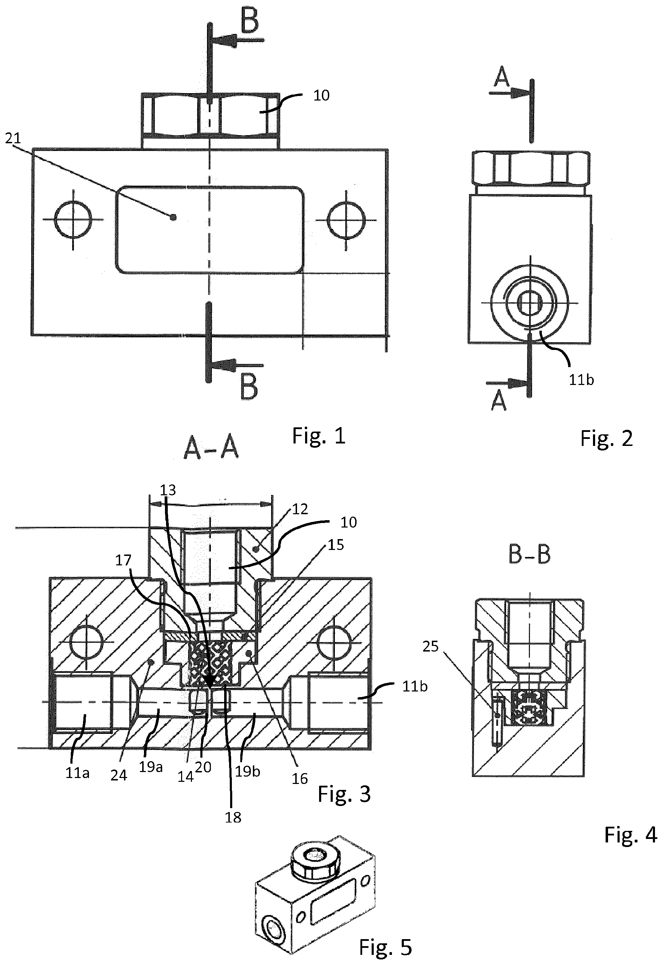

Die Fig. 1 - 5 zeigen einen erfindungsgemäßen Schmierstoffverteiler. Dieser weist einen Eingang 10 für die Aufnahme eines Schmierstoff-Luft-Gemisches auf, sowie zwei Ausgänge 11a, 11b (siehe Fig. 3) zur Abgabe des Schmierstoff-Luft-Gemisches an mehrere (mindestens zwei) Schmierstellen. Eingang 10 und Ausgänge 11a, 11b können Gewinde für eine Verbindung mit Zu- bzw. Ableitungen aufweisen. Der Eingang 10 wird im vorliegenden Fall (nicht zwingend) durch ein (separates) Anschlusselement 12 (Anschlussverschraubung) ausgebildet.

Das in den Eingang 10 einströmende Schmierstoff-Luft-Gemisch wird an einer Verzweigungsstelle 13 (siehe Fig. 3) in die einzelnen Teilströme aufgezweigt, so dass mehrere Schmierstellen mit Schmierstoff versorgt werden können. Vor (bzw. unmittelbar vor) der Verzweigungsstelle 13 ist ein Zerteileinsatz 14 angeordnet. Zwischen dem Zerteileinsatz 14 und dem Anschlusselement 12 kann ein Dichtelement (Dichtring) 15 angeordnet sein.

In der vorliegenden Ausführungsform ist der Zerteileinsatz 14 in einer Hülse 16 gehalten. Diese sitzt wiederum in einer Verteilerleiste 24. Anschlusselement 12 und Dichtelement 15 sind so ausgeformt, dass ein stromaufwärts gewandtes Ende 17 des Zerteileinsatzes 14 teilweise von dem Dichtelement 15 bedeckt ist. Dadurch ist eine Schnittstelle zwischen Zerteilelement 14 und einer Zuführung des Schmierstoff-Luft-Gemisches vergleichsweise klein, insbesondere im Vergleich zu einer Schnittstelle an einem stromabwärts gewandten Ende 18 des Zerteilelementes 14 gegenüber den Schmierstoff-Luft-Gemisch-Ableitungen. Die unmittelbar an den Zerteileinsatz 14 angrenzenden Schmierstoff-Luft-Gemisch-Ableitungen 19a, 19b werden durch eine Wand 20 voneinander getrennt, so dass das Schmierstoff-Luft-Gemisch effektiv auf die zwei Schmierstoff-Luft-Gemisch-Ableitungen 19a, 19b aufgeteilt werden kann.

In Fig. 4 ist ein (optionaler) Spannstift 25 erkennbar. In Fig. 1 ist ein (optionales) Etikett 21 angedeutet.

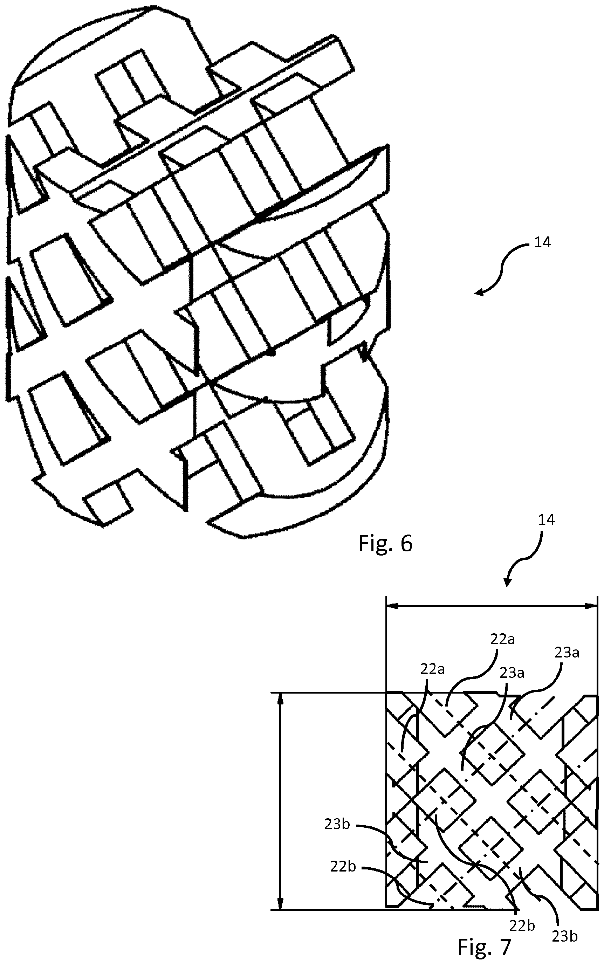

Der erfindungsgemäße Zerteileinsatz 14 ist in größerem Detail in den Fig. 6 und 7 abgebildet. Dort erkennt man, dass es sich bei dem Zerteileinsatz um eine dreidimensionale Gitterstruktur handelt. Eine Vielzahl von Zerteilkanälen (in Fig. 7 gestrichelt bzw. strichpunktiert hervorgehoben) 22a, 22b verläuft durch den Zerteileinsatz. Die gestrichelt angedeuteten Zerteilkanäle bilden dabei eine erste Gruppe 22a, die strichpunktiert angedeuteten Zerteilkanäle bilden eine zweite Gruppe 22b. Wie insbesondere aus der Schrägansicht gemäß Fig. 6 erkennbar, sind die Zerteilkanäle 22a in Verbindung miteinander. Genauso sind die Kanäle 22b in Verbindung miteinander. Weiterhin sind auch die Kanäle 22a mit den Kanälen 22b in Verbindung. Dabei sind nicht nur Verbindungen an dem stromaufwärts zugewandten Ende 17 oder dem stromabwärts gewandten Ende 18 realisiert, sondern auch zwischen diesen beiden Enden. Die erste Gruppe von Zerteilkanälen 22a wird durch eine erste Gruppe von Stegen 23a begrenzt. Die zweite Gruppe von Zerteilkanälen 22b wird durch eine zweite Gruppe von Stegen 23b begrenzt. Die ersten Zerteilkanäle 22a verlaufen senkrecht zu den zweiten Zerteilkanälen 22b. Genauso verlaufen die ersten Stege 23a senkrecht zu den zweiten Stegen 23b.

Das Zerteilelement gemäß Fig. 6 und 7 weist eine zylindrische Geometrie auf.

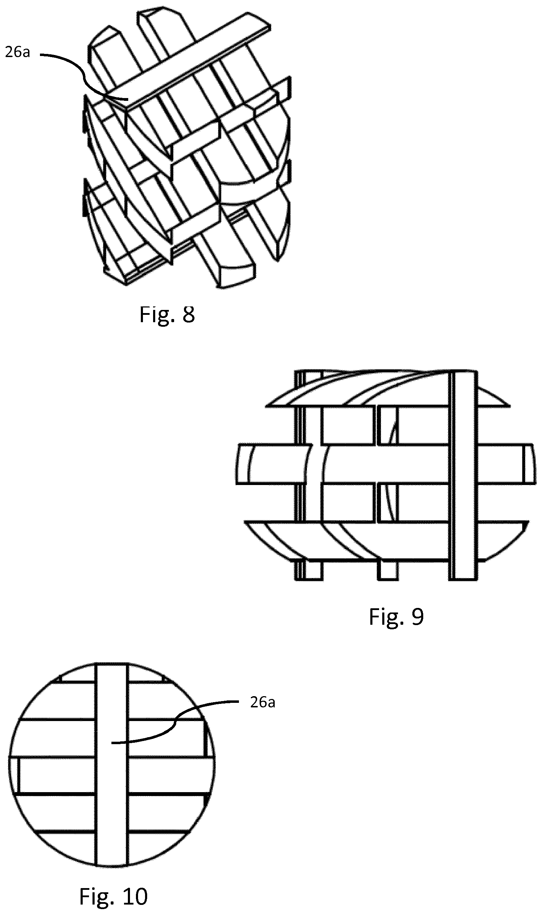

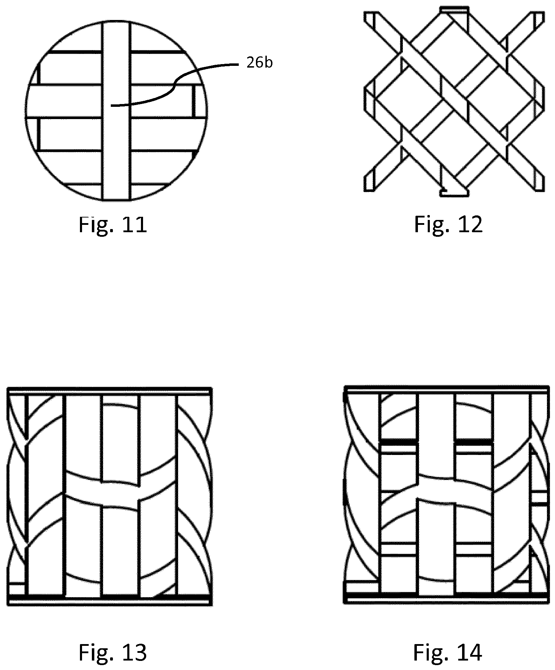

Die Fig. 8 bis 14 zeigen eine weitere Ausführungsform eines erfindungsgemäßen Zerteileinsatzes. Dieser entspricht im Wesentlichen dem Zerteileinsatz gemäß den Fig. 6 und 7. Im Unterschied zu den Ausführungsformen 6 und 7 sind an den beiden Enden des Zerteileinsatzes (siehe Fig. 8, 10 und 11) senkrecht zur Hauptströmungsrichtung verlaufende Stege 26a, 26b vorgesehen. Auch eine Struktur in einem Mantelbereich des grundsätzlich ebenfalls (im Wesentlichen) zylinderförmigen Zerteileinsatzes gemäß den Fig. 8 bis 13 ist leicht abweichend von der Ausführungsform gemäß den Fig. 6 bis 7 ausgebildet.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Eingang
- 11a, 11b: Ausgang
- 12: Anschlusselement
- 13: Verzweigungsstelle
- 14: Zerteileinsatz
- 15: Dichtelement (Dichtring)
- 16: Hülse
- 17: Stromaufwärts gewandtes Ende
- 18: Stromabwärts gewandtes Ende
- 19a, 19b: Schmierstoff-Luft-Gemisch-Ableitung
- 20: Wand
- 21: Etikett
- 22a, 22b: Zerteilkanal
- 23a, 23b: Steg
- 24: Verteilerleiste
- 25: Spannstift
- 26a: Steg
- 26b: Steg

## Patentansprüche

1. Schmierstoffverteiler für ein Schmiersystem zum Ausbringen eines Schmierstoff-Luft-Gemisches auf eine Schmierstelle, insbesondere eines Schienenfahrzeuges, vorzugsweise auf einen Spurkranz, wobei der Schmierstoffverteiler mindestens einen Eingang zur Aufnahme von Luft, mindestens einen Eingang zur Aufnahme von Schmierstoff und einen Mischbereich zur Mischung der Luft und des Schmierstoffes zu einem Schmierstoff-Luft-Gemisch aufweist und/oder mindestens einen Eingang (10) zur Aufnahme eines Schmierstoff-Luft-Gemisches aufweist sowie mindestens zwei Ausgänge (11a, 11b) zur Abgabe des Schmierstoff-Luft-Gemisches aufweist, wobei, vorzugsweise vor oder in einer Verzweigungsstelle (13) zur Aufteilung des Schmierstoff-Luft-Gemisches in mindestens zwei Teilströme, mindestens ein Zerteilelement, insbesondere Zerteileinsatz (14), angeordnet ist, zur Zerteilung des Schmierstoff-Luft-Gemisches, wobei das Zerteilelement (14) eine Vielzahl von Zerteilkanälen (22a, 22b) ausbildet, wobei die Zerteilkanäle (22a, 22b) miteinander kommunizieren, so dass Moleküle des Schmierstoff-Luft-Gemisches über eine Vielzahl von verschiedenen Pfaden durch das Zerteilelement strömen können und wobei das Zerteilelement (14) derart angeordnet und konfiguriert ist, dass im Betrieb sowohl die Luft als auch der Schmierstoff des Schmierstoff-Luft-Gemisches durch die Zerteilkanäle (22a, 22b) strömen.

2. Schmierstoffverteiler nach Anspruch 1,
**dadurch gekennzeichnet, dass**
erste Zerteilkanäle (22a) und zweite Zerteilkanäle (22b) ausgebildet sind, wobei die ersten Zerteilkanäle (22a) in einem Winkel gegenüber den zweiten Zerteilkanälen (22b), insbesondere einem Winkel von 30° bis 120°, vorzugsweise zumindest ungefähr 90°, verlaufen.

3. Schmierstoffverteiler nach Anspruch 1 oder 2,
**dadurch gekennzeichnet, dass**
das Zerteilelement (14) ein dreidimensionales Gitter ausbildet, vorzugsweise mit einer Vielzahl von Zerteilstegen (23a, 23b), die das dreidimensionale Gitter ausbilden.

4. Schmierstoffverteiler nach einem der vorangehenden Ansprüche,
**dadurch gekennzeichnet, dass**
das Schmierstoff-Luft-Gemisch unmittelbar nach dem Zerteilelement (14) in mindestens zwei Teilströmen abgeführt wird.

5. Schmierstoffverteiler nach einem der vorangehenden Ansprüche,
**dadurch gekennzeichnet, dass**
eine Projektion des Zerteilelementes (14) auf ein Auslassende desselben eine geschlossene Fläche ausbildet und/oder eine Projektion des Zerteilelementes (14) auf mindestens eine Ebene, die parallel zu der Hauptströmungsrichtung verläuft, freie Bereiche aufweist und/oder eine Projektion des Zerteilelementes (14) auf mindestens eine Ebene, vorzugsweise mindestens oder genau zwei Ebenen, die schräg, vorzugsweise zumindest ungefähr in einem 45°-Winkel, zu der Hauptströmungsrichtung verläuft/verlaufen, freie Bereiche aufweist.

6. Schmierstoffverteiler nach einem der vorangehenden Ansprüche,
**dadurch gekennzeichnet, dass**
die Zerteilkanäle (22a, 22b) einen Durchmesser von mindestens 0,5 mm, vorzugsweise mindestens 0,8 mm und/oder höchstens 3,0 mm, vorzugsweise höchstens 2,0 mm aufweisen und/oder
eine Querschnittsfläche von mindestens 0,12 mm², vorzugsweise mindestens 0,30 mm² und/oder höchstens 4,30 mm², vorzugsweise höchstens 1,90 mm² aufweisen.

7. Schmierstoffverteiler nach einem der vorangehenden Ansprüche,
**dadurch gekennzeichnet, dass**
das Zerteilelement (14) zumindest abschnittsweise aus einem Kunststoff, insbesondere Polymer, vorzugsweise Polyolefin, weiter vorzugsweise Polypropylen gefertigt ist und/oder zumindest abschnittsweise aus Metall gefertigt ist.

8. Schmierstoffverteiler nach einem der vorangehenden Ansprüche,
**dadurch gekennzeichnet, dass**
die Zerteilkanäle (22a, 22b) zumindest abschnittsweise gerade und/oder zumindest abschnittsweise schräg zu einer Hauptströmungsrichtung verlaufen.

9. Schmierstoffverteiler nach einem der vorangehenden Ansprüche,
**dadurch gekennzeichnet, dass**
das Zerteilelement (14) eine Erstreckung in einer Hauptströmungsrichtung von mindestens 3 mm und/oder höchstens 30 mm, vorzugsweise höchstens 20 mm aufweist.

10. Schmierstoffverteiler nach einem der vorangehenden Ansprüche,
**dadurch gekennzeichnet, dass**
Moleküle des Schmierstoff-Luft-Gemisches über eine Vielzahl von vorzugsweise mindestens fünf, weiter vorzugsweise mindestens 20 verschiedene Pfade durch das Zerteilelement (14) strömen können und/oder
Moleküle des Schmierstoff-Luft-Gemisches, die an einem bestimmten Ort in das Zerteilelement (14) eintreten an mindestens zwei, vorzugsweise mindestens fünf verschiedenen Orten austreten können, wobei ein Abstand der verschiedenen Orte vorzugsweise größer ist als ein Durchmesser der Zerteilkanäle.

11. Schmierstoffverteiler nach einem der vorangehenden Ansprüche,
**dadurch gekennzeichnet, dass**
das Zerteilelement ein Hohlraumvolumen von mindestens 30 %, vorzugsweise mindestens 55 % und/oder höchstens 90 %, vorzugsweise höchstens 80 % aufweist.

12. Schmierstoffverteiler nach einem der vorangehenden Ansprüche,
**dadurch gekennzeichnet, dass**
das Zerteilelement ein Gewicht von mindestens 0,05 g, vorzugsweise mindestens 0,12 g und/oder höchstens 1,00 g, vorzugsweisens höchste 0,50 g aufweist.

13. Verwendung eines Zerteilelementes (14), insbesondere eines Zerteileinsatzes, zur Zerteilung eines Schmierstoff-Luft-Gemisches in einem Schmierstoffverteiler, insbesondere nach einem der vorangehenden Ansprüche, wobei das Zerteilelement eine Vielzahl von Zerteilkanälen (22a, 22b) ausbildet, wobei die Zerteilkanäle (22a, 22b) miteinander kommunizieren.

14. Verfahren zur Aufteilung eines Schmierstoff-Luft-Gemisches unter Verwendung des Schmierstoffverteilers nach einem der Ansprüche 1 bis 12, wobei das Schmierstoff-Luft-Gemisch in dem Zerteilelement (14) zerteilt wird.
